# EUROPEAN PATENT APPLICATION

(11) **EP 4 312 421 A1**
(43) Date of publication of application: **31.01.2024**
(21) Application number: 23188004.8
(22) Date of filing: 27.07.2023
(51) Int. Cl.: H04L 67/306, B60R 16/037, H04W 4/44

(54) **TRANSFER OF DRIVER PROFILE FOR VARIOUS VEHICLES**

(30) Priority: 27.07.2022 US 202217815378
(71) Applicant: Paccar Inc, Bellevue, WA 98004 (US)
(72) Inventor: SINGARAVELU, Shreyas Vishal, Bellevue, 98004 (US)
(74) Representative: Calysta NV

(57) **Abstract**

Systems and methods for transferring a driver profile between various vehicles. A driver profile is created in association with a driver of a first vehicle having a mobile device that executes a mobile application configured to communicate with and receive driver-adjusted configuration settings associated with operation of the first vehicle. The mobile application may store the adjusted configuration settings in the driver profile. The mobile application may be further configured to communicate with a plurality of other vehicles. In some examples, when the driver operates a second vehicle of the plurality of other vehicles, the mobile application can map the adjusted configuration settings in the driver profile to a set of adjusted configuration settings for the second vehicle. For example, the second vehicle may adjust various configuration settings of the second vehicle based on the received adjusted configuration settings.

## Description

### BACKGROUND

Vehicles typically have various configuration settings that can be adjusted by drivers to personalize the vehicles to the drivers' preferences. Some vehicles are able to store configuration settings for a minimal number of drivers (e.g., 2-4); however, adjusting the configuration settings for each driver and for each vehicle that each driver operates is not only time-consuming, but can cause wasted time for a driver each time the driver operates a new vehicle. As can be appreciated, this can be problematic, e.g., in various vehicle fleet scenarios, where multiple vehicles are operated by multiple drivers.

While relatively specific examples have been discussed, it should be understood that aspects of the present disclosure should not be limited to solving the specific examples identified in the background.

### SUMMARY

The disclosure generally relates to transferring a driver profile between various vehicles according to examples.

According to examples, a method is provided, comprising: creating a driver profile corresponding to a driver; receiving an indication of the driver operating a first vehicle at a first time; establishing a first communication link with the first vehicle receiving, via the first communication link, adjusted configuration settings associated with the first vehicle; storing the adjusted configuration settings associated with the first vehicle in the driver profile; receiving an indication of the driver operating a second vehicle at a second; establishing a second communication link with the second vehicle; determining the driver profile includes adjusted configuration settings that are mappable to configuration settings of the second vehicle; mapping the adjusted configuration settings in the driver profile to a set of adjusted configuration settings associated with the second vehicle; and providing the adjusted configuration settings associated with the second vehicle to the second vehicle via the second communication link to personalize the second vehicle to the driver.

According to examples, a system is provided, comprising: at least one processor; a memory including instructions, which when executed by the processor, cause the system to: create a driver profile corresponding to a driver; receive an indication of the driver operating a first vehicle at a first time; establish a first communication link with the first vehicle; receive, via the first communication link, adjusted configuration settings associated with the first vehicle; store the adjusted configuration settings associated with the first vehicle in the driver profile; receive an indication of the driver operating a second vehicle at a second time; establish a second communication link with the second vehicle; determine the driver profile includes adjusted configuration settings that are mappable to configuration settings of the second vehicle; map the adjusted configuration settings in the driver profile to a set of adjusted configuration settings associated with the second vehicle; and provide the adjusted configuration settings associated with the second vehicle to the second vehicle via the second communication link to personalize the second vehicle to the driver.

According to examples, a method is provided, comprising: receiving an indication of a driver operating a first vehicle at a first time; establishing a first communication link with a mobile computing device associated with the driver; receiving, a driver profile including a set of adjusted configuration settings associated with a second vehicle operated by the driver; receiving a set of mappings between configuration settings of the first vehicle and the second vehicle; and translating the adjusted configuration settings associated with a second vehicle to a set of translated configuration settings for the first vehicle.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

### BRIEF DESCRIPTION OF THE DRAWINGS

Non-limiting and non-exhaustive examples are described with reference to the following figures:
**FIGURE 1** is a block diagram illustrating an operating environment in which driver profile transfer may be implemented according to an example;
**FIGURE 2** is a flow diagram illustrating processing steps of a method that can be used to transfer a driver profile between various vehicles according to an example;
**FIGURE 3** is a block diagram illustrating example physical components of a computing device or system with which examples may be practiced.

### DETAILED DESCRIPTION

The following detailed description refers to the accompanying drawings. Wherever possible, the same reference numbers are used in the drawings and the following description to refer to the same or similar elements. While aspects of the present disclosure may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the following detailed description does not limit the present disclosure, but instead, the proper scope of the present disclosure is defined by the appended claims. The following detailed description is, therefore, not to be taken in a limiting sense.

As mentioned above, a vehicle typically has various configuration settings that can be adjusted by a driver to personalize the vehicle to the driver's preferences. For instance, the configuration settings may include various settings related to the driver's positioning while operating the vehicle, such as seat adjustment settings, steering wheel positioning settings, mirror positioning settings, etc. Other configuration settings may include settings related to various interfaces between the driver and the driver's environment (sometimes referred to herein as operator interface settings), such as cabin lighting settings, cabin temperature settings, sound level settings, user interface settings, such as vehicle menu settings, time settings, language settings, favorites instrumentation layout, shortcut button assignment, display brightness levels, radio tuning settings, etc. Other configuration settings may include settings related to operation of the vehicle, such as advanced driver assistance systems (ADAS) settings, autonomous driving (AD) settings, adaptive cruise control settings, shutdown timer settings, anti-theft settings, etc. Alternative and/or additional configuration settings are possible and are within the scope of the present disclosure. As can be appreciated, adjusting the various configuration settings that are available to a vehicle may be time-consuming.

In some examples, a driver may operate multiple vehicles. For instance, the driver may work for an enterprise that owns various vehicles. In some examples, the vehicles may include various types of vehicles. Each time the driver operates a different truck, the driver may spend an amount of time adjusting various configuration settings of the vehicle to personalize the vehicle to the driver. As can be appreciated, the time spent by the driver adjusting the configuration settings may translate into downtime of operation of the vehicle. Additionally, in some cases, a driver may not want to spend the time to adjust the configuration settings when operating a new vehicle, and may, therefore, not personalize various settings to the driver. In some examples, the various settings may include safety-related settings, and failure to adjust them properly may provide a less-than-optimally safe vehicle for the driver to operate.

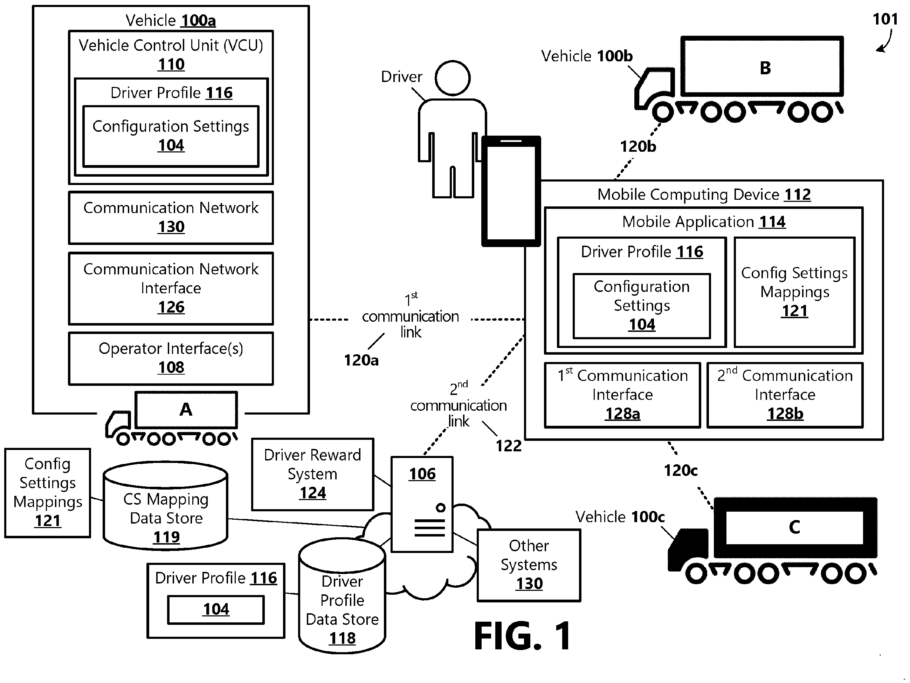

In examples, aspects of the present disclosure provide systems and methods for transferring a driver profile between various vehicles. According to examples, a driver profile is created in association with a driver of a first vehicle. The driver may have a mobile computing device (e.g., mobile phone, wearable device, tablet device) that executes a mobile application that is configured to communicate with the first vehicle and receive driver-adjusted configuration settings associated with operation of the first vehicle. The mobile application may further store the adjusted configuration settings in the driver profile. In some examples, the mobile application may be configured to communicate with a remote server to store, and later retrieve, the adjusted configuration settings. The mobile application may be further configured to communicate with each of a plurality of other vehicles. In some examples, when the driver operates a second vehicle of the plurality of other vehicles, the mobile application can map the adjusted configuration settings in the driver profile to a set of adjusted configuration settings for the second vehicle. For example, various configuration settings of the second vehicle may be adjusted based on the received adjusted configuration settings. These and other examples are discussed below with reference to **FIGURES 1-3****.**

**FIGURE 1** is a block diagram illustrating an example operating environment **101** in which driver profile transfer may be implemented. With reference now to **FIGURE 1****,** the example operating environment **101** includes a mobile computing device **112** operated by a driver of a plurality of vehicles **100a-c** (collectively, vehicles **100).** The mobile computing device **112,** for example, may include a mobile phone, laptop, wearable device, tablet device, or other mobile device operative to execute a mobile application **114** and communicate with the vehicles **100.** Although **FIGURE 1** depicts three vehicles **100,** in other examples, fewer (e.g., 2) or more (e.g., 4+) vehicles **100** may be operated by the driver. Additionally, while the vehicles **100** are depicted as trucks, in other examples, the vehicle **100** may be one of various types of vehicles, such as, but not limited to: a car, motorcycle, recreational vehicle, construction equipment, farm equipment, aircraft, or other type of vehicle capable of carrying at least one human passenger (including a driver of the vehicle). As depicted, each vehicle **100** may include a vehicle control unit (VCU) **110,** a communication network **130,** a communication network interface **126,** and one or more operator interfaces **108.** The communication network **130,** for example, may include a bus including one or more bus standards, switches, and networks, including but not limited to Ethernet, Communications Area Network (CAN), FlexRay, I2C buses, PC Express buses, etc. In some examples, the VCU **110** may operate as an in-vehicle computing device for managing the collection and dissemination of information.

In some examples, the VCU **110** may collect and transmit information over the communication network **130** to/from various vehicle components and process the information for controlling operation of the vehicle, controlling various operator interfaces **108** (e.g., graphical display(s) and other components of the vehicle with which the driver may interface in the driver's environment during operation of the vehicle), displaying appropriate information to the driver via an operator interface **108,** such as a graphical display, and other vehicle operations. In some examples, the VCU **110** may receive driver input via driver interaction with an operator control input of an operator interface **108.** Some non-limiting examples of operator control input of an operator interface **108** may include a touchscreen, buttons, knobs, or other controls for adjusting, (e.g., via the driver's touch, voice, or gesture) a seat, mirror, steering wheel, temperature, lighting brightness, sound level, the graphical display, and/or other environmental factors related to the driver while operating the vehicle **100.**

In some examples, the VCU **110** may further collect and transmit information over a first wireless communication link **120a-c** (collectively, first communication link **120**) to/from the mobile application **114** operating on the driver's mobile computing device **112.** The first communication link **120** may include a short-range wireless communication channel established between the vehicle **100** and the mobile computing device **112.** In some examples, the first communication link **120** is a personal area network (PAN), such as a BLUETOOTH communication link. For example, the mobile computing device **112** may include a first communication interface **128a** (e.g., a BLUETOOTH interface) that may operate to communicate with and establish the first communication link **120** with the vehicle **100** via a corresponding network communication interface **126** (e.g., a BLUETOOTH interface) included in the vehicle **100.** Other examples of a first communication link **120** are possible and contemplated, including, without limitation, WiFi, ZigBee, near-field communication (NFC), etc.

According to examples, the collected, processed, and/or transmitted information may include various configuration settings **104** that may be adjusted to personalize the vehicle **100** to the driver's preferences. For instance, the various configuration settings **104** may include various settings related to the driver's positioning while operating the vehicle **100,** such as seat adjustment settings, steering wheel positioning settings, mirror positioning settings, etc. Other configuration settings **104** may include various operator interface settings, such as cabin lighting settings, cabin temperature settings, sound level settings, vehicle menu settings, time settings, language settings, favorites instrumentation layout, shortcut button assignment, display brightness levels, radio tuning settings, etc. Other configuration settings **104** may include settings related to operation of the vehicle **100** via one or more vehicle systems. Such operational settings may include advanced driver assistance systems (ADAS) settings, autonomous driving (AD) settings, adaptive cruise control settings, shutdown timer settings, anti-theft settings, etc. In some examples, when operating a vehicle **100,** the driver may adjust one or more of the various configuration settings **104,** for example, from a default setting or previous setting to a setting personalized to the driver. For instance, adjustments may be made via driver interaction with one or more operator interfaces **108.** The adjustments to the configuration settings **104,** which may sometimes be referred to herein as driver-adjusted configuration settings **104,** may personalize the vehicle **100** to the driver and put the vehicle **100** in a ready-to-operate condition for the driver.

According to an example implementation, one or more driver-adjusted configuration settings **104** may be stored in a custom data file that includes various fields for receiving and storing information corresponding to the driver. The custom data file may herein be referred to as a driver profile **116.** In some examples, the one or more driver-adjusted configuration settings **104** may be stored in association with a particular vehicle **100** and/or a particular vehicle type (e.g., make, model). The driver profile **116** may further store a driver identifier (ID) associated with the driver. In some examples, the driver profile **116** may store additional information about the driver, such as the driver's name, and/or other information about the driver. Each of a number of different drivers (including the driver of vehicle **100**) may be associated with a different driver profile.

In some examples, the driver profile **116** may be created by the VCU **110** of a first vehicle **100a** in response to receiving driver input via driver interaction with an operator control input of an operator interface **108,** such as via a menu option provided by a display screen included in the first vehicle **100a.** In other examples, the driver profile **116** may be created in response to receiving driver input via driver interaction with the mobile application **114.** For instance, the mobile application **114** may be configured to allow the driver to create the driver profile **116** via inputs and/or selections made via the mobile application **114.** Based on the obtained input, the mobile application **114** may create the driver profile **116.**

In some example implementations, the VCU **110** may be configured to store one or more driver-adjusted configuration settings **104** in the driver's driver profile **116.** In other example implementations, the VCU **110** may be configured to communicate with the mobile application **114,** which may be configured to store one or more driver-adjusted configuration settings **104** in the driver's driver profile **116.** For instance, the mobile application **114** may obtain and/or transmit driver profile information (e.g., driver-adjusted configuration settings **104**) with the VCU **110** via the first communication link **120.** In some examples, when the driver's mobile computing device **112** is within shortrangewireless communication range of the first vehicle **100a,** a connection (e.g., the first communication link **120**) may be established between the driver's mobile computing device **112** and the first vehicle **100a.** In some examples, the driver's identity may first be authenticated before establishing the first communication link **120.**

In some examples, the mobile computing device **112** may include a second communication interface **128b** that may enable communication with remote resources over one or a combination of Internet Protocol (IP)-based networks (e.g., a second communication link **122**). In examples, second communication ink **122** may comprise WiFi, a cellular network, the Internet, a wide area network, or otherwise. The mobile application **114** may be configured to communicate with a remote server **106** that includes or has access to a driver profile data store **118.** The mobile application **114,** for example, may transmit and obtain driver profile information (e.g., driver-adjusted configuration settings **104**) to/from the driver profile data store **118.** For instance, the driver profile data store **118** may include a database operative to store, and make accessible, driver profiles **116** for each of a plurality of different drivers (including the driver of vehicle **100**).

As mentioned above, the driver-adjusted configuration settings **104** in the driver's driver profile **116** may be stored in association with the first vehicle **100a.** According to examples, the mobile application **114** may be configured to communicate with the VCU **110** of another vehicle **100** (e.g., a second vehicle **100b** and/or a third vehicle **100c**). For example, the driver may operate the second vehicle **100b** and/or the third vehicle **100c** at another time, and a first communication link **120b** may be selectively established between the driver's mobile computing device **112** and the second vehicle **100b** and/or third vehicle **100c** when the driver's mobile computing device **112** is within communication range (e.g., shortrange wireless communication range) of the second vehicle **100b** and/or third vehicle **100c.** Via a first communication link **120b, 120c** established between the driver's mobile computing device **112** and the second vehicle **100b** and/or third vehicle **100c,** the VCU **110** of the second vehicle **100b** and/or third vehicle **100c** may obtain driver profile information associated with the driver. The driver profile information, for example, may include the driver-adjusted configuration settings **104** received in association with the first vehicle **100a.**

For example, the VCU **110** of the second vehicle **100b** and/or third vehicle **100c** may use the driver profile information to adjust the configuration settings **104** of the second vehicle **100b** and/or third vehicle **100c** to match or correspond to the driver-adjusted configuration settings **104** made in association with the first vehicle **100a.** In some examples, the first vehicle **100a** and the second vehicle **100b** are the same vehicle. For instance, the driver-adjusted configuration settings **104** made in association with the first vehicle **100a** may be transmitted by the mobile application **114** to the first/second vehicle **100a/100b** to prepare the first/second vehicle **100a/100b** into operating condition for the same user a second time. For instance, the seat, mirrors, lighting, graphical display, configurable operator control inputs, radio, and/or other configurable components of the first/second vehicle **100a/100b** may be automatically adjusted based on the driver profile information received from the mobile application **114.**

In other examples, the second vehicle **100b** is a different vehicle, but may be of a same make and model as the first vehicle **100a.** For instance, the driver-adjusted configuration settings **104** made in association with the first vehicle **100a** may map directly to configuration settings **104** for the second vehicle **100b.** Thus, when the driver operates the second vehicle **100b,** the driver-adjusted configuration settings **104** made in association with the first vehicle **100a** may be transmitted by the mobile application **114** to the second vehicle **100b** and used by the VCU **110** of the second vehicle **100b** to adjust the default or previous configuration settings **104** of the second vehicle **100b** to match the first vehicle settings. For instance, the seat, mirrors, lighting, graphical display, configurable operator control inputs, radio, and/or other configurable components of the second vehicle **100b** may be automatically adjusted to match the driver profile information received from the mobile application **114.**

In some examples, the third vehicle **100c** is a different vehicle, and may be of a different make and/or model as the first vehicle **100a.** For instance, one or more of the driver-adjusted configuration settings **104** made in association with the first vehicle **100a** may not map directly to configuration settings **104** for the third vehicle **100c.** As an example, a range of selectable heights of the driver seat in the first vehicle **100a** may be different from a range of selectable heights of the driver seat in the third vehicle **100c.** In some examples, the range of heights may correspond to a variable between the first vehicle **100a** and the third vehicle **100c,** such as a line-of-sight angle with respect to a viewing angle of the driver over a hood or front part of the vehicle **100,** distance to a floorboard and/or pedals, etc. Thus, based on known or estimated values of the variables, the mobile application **114** may be configured to translate the height of the driver seat in the first vehicle **100a** into a corresponding height of the driver seat in the third vehicle **100c.** As can be appreciated, the mobile application **114** may be configured to translate additional and/or other configuration settings **104** based on additional/other variables between different vehicles **100.** In some examples, the mobile application **114** may store mappings between configuration setting variables of various types of vehicles **100.** In other examples, the mappings may be stored remotely and relevant mappings may be accessed by the mobile application **114.**

For example, the mobile application **114** may communicate with a server **106** that includes or has access to a mappings data store **119** configured to store and make available mappings between configuration setting variables of various types of vehicles **100,** such as the first vehicle **100a** and the third vehicle **100c.** These mappings may sometimes be referred to herein as configuration settings mappings **121.** Thus, when the driver operates the third vehicle **100c,** the mobile application **114** may, in some examples, access configuration setting mappings **121** from the mappings data store **119.** As an example, when the driver operates the third vehicle **100c** for a first time, the mobile application **114** may request and obtain driver profile information associated with the driver, including driver-adjusted configuration settings **104** for another vehicle **100,** such as the first vehicle **100a.** Additionally, the mobile application **114** may access or may request and obtain mapping information (e.g., configuration settings mappings **121)** for the driver-adjusted configuration settings **104** associated with the first vehicle **100a.** In some examples, the mobile application **114** may be further configured to use the mapping information to translate the one or more driver-adjusted configuration settings **104** associated with the first vehicle **100a** into a set of translated driver-adjusted configuration settings **104** associated with the third vehicle **100c.** These translated driver-adjusted configuration settings **104** may be transmitted by the mobile application **114** to the third vehicle **100c** via the first communication link **120c** established between the driver's mobile computing device **112** and the third vehicle **100c.** For example, the translated configuration settings **104** may be included in driver profile information provided to the VCU **110** via the first communication link **120c.** In examples, the mapping information may be configured to place a driver in a relatively similar or same position in the third vehicle **100c** as the driver was in while in the first vehicle **100a** (e.g., same distance from a front edge of the seat to the pedals, same angle of sight over a visible hood edge, etc.). Even when the mapping information cannot (due to differences between the first vehicle **100a** and the third vehicle **100c)** place the driver in a same position in all respects, the mapping information may prioritize certain relative positions over others and/or place the driver in a similar enough position in the third vehicle **100c** that additional adjustments are needed by the driver.

In other examples, the mobile application **114** may transmit relevant mapping information to the VCU **110,** which may be configured to use the mapping information to translate the one or more driver-adjusted configuration settings **104** associated with the first vehicle **100a** (e.g., included in driver profile information associated with the driver) into a set of translated driver-adjusted configuration settings **104** associated with the third vehicle **100c.**

According to examples, the translated configuration settings **104** may be used by the VCU **110** to adjust the default or previous configuration settings **104** of the third vehicle **100c** to match (to the extent possible) or correspond to the first vehicle settings. For instance, the seat, mirrors, lighting, graphical display, configurable operator control inputs, radio, and/or other configurable components of the third vehicle **100c** may be automatically adjusted to match or be generally similar to the driver-adjusted configuration settings **104** associated with the first vehicle **100a** received from the mobile application **114.**

In some examples, the translated configuration settings **104** may be saved in the driver's driver profile **116** by the mobile application **114** as driver-adjusted configuration settings **104** in association with the third vehicle **100c.** In some examples, while operating the third vehicle **100c,** the driver may make one or more adjustments to the configuration settings **104.** These driver-adjusted configuration settings **104** may be transmitted to the mobile application **114,** which may update the previously saved/stored driver-adjusted configuration settings **104** associated with the third vehicle **100c.**

In some examples, one or more driver-adjusted configuration settings **104** associated with the first vehicle **100a** may not be translatable to a translated configuration setting **104** for the third vehicle **100c.** In other examples, translated configuration settings **104** may not be available for one or more configuration settings **104** associated with the third vehicle **100c.** For instance, the first vehicle **100a** may not have a feature with which the third vehicle **100c** is equipped, or vice versa. When a translation is not provided for a configuration setting **104,** the VCU **110,** for example, may leave the configuration setting **104** in at its default or previous setting. In some examples, the VCU **110** may cause a graphical display in the third vehicle **100c** to display a menu where the configuration setting **104** may be adjusted by the driver.

In some examples, additional information may be received by the mobile application **114** from a vehicle **100** via the first communication link **120** and included in the driver profile **116** corresponding to the driver, such as driver-specific trip summary information associated with operation of the vehicle while being operated by the driver. For instance, driver-specific trip summary information may include information associated with fuel efficiency, traffic law obedience, etc., and/or other driver behaviors that may be determined as positive behaviors that may be rewarded. In some examples, the mobile application **114** may include driver-specific trip summary information in driver profile information transmitted to the server **106** to be stored in the driver profile data store **118.** In some examples, the driver-specific trip summary information included in the driver's driver profile **116** may be accessed by a driver rewards system **124** configured to determine driver rewards based on received driver-specific trip summary information associated with operation of one or more vehicles **100** during one or more times of operation. In other examples, the mobile application **114** may communicate with a server **106** that includes or has access to the driver rewards system **124.** In other examples, the mobile application **114** may communicate with other systems **130.**

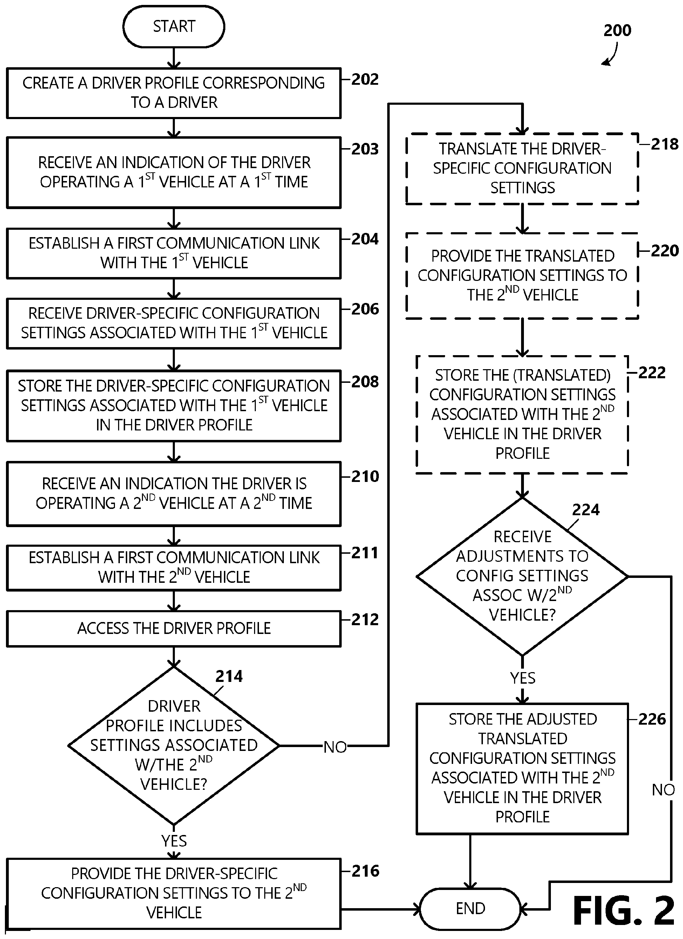

With reference now to **FIGURE 2****,** a flow diagram is provided illustrating example processing steps of a method **200** that can be used to transfer driver profile information between various vehicles **100** according to an example. At operation **202,** a driver profile **116** corresponding to a particular driver may be created. The driver profile **116** may include a driver ID. In some examples, the driver profile **116** may be created using a mobile application **114** operating on the driver's mobile computing device **112.** In other examples, the driver profile **116** may be created by the VCU **110** of a vehicle **100** being operated by the driver in response to interaction with a graphical display or other driver interface **108** on the vehicle **100.**

At operation **203,** an indication of the driver operating a first vehicle **100a** at a first time may be received. According to one example implementation, operation of the vehicle **100** may be initiated when an ignition of the vehicle **100** is switched into a particular position or setting (e.g., an accessory or electronics on position/setting), and may end when the ignition of the vehicle **100** is switched into an off position/setting. In other examples, operation of the vehicle **100** may be initiated when the mobile computing system **112** is brought within range (e.g., within the cabin) of the vehicle **100,** among other possibilities.

At operation **204,** the first communication link **120a** may be selectively established. For example, the communication network interface **126** of the first vehicle **100a** may be configured to transmit a signal that may be received by the first communication interface **128a** of the driver's mobile computing device **112** when the driver's mobile computing device **112** is within short-range wireless communication range of the first vehicle **100a.** In some examples, an option to establish a first communication link **120a** with the first vehicle **100a** may be presented on the driver's mobile computing device **112,** which may be selected by the driver. In other examples, an option to establish the first communication link **120a** with the driver's mobile computing device **112** may be presented on a graphical display of the first vehicle **100a,** which may be selected by the driver. As mentioned above, the first communication link **120a** may be a BLUETOOTH communication link. In some examples, the driver's identity may be authenticated prior to establishing the first communication link **120a.**

During operation of the first vehicle **100a** by the driver, one or more configuration settings of the first vehicle **100a** may be adjusted by the driver. At operation **206,** during and/or after operation of the first vehicle **100a,** one or more of the driver-adjusted configuration settings may be transmitted to and received by the mobile application **114** via the first communication link **120a.** In some examples, driver-specific trip summary information associated with operation of the first vehicle **100a** during the first time while being operated by the driver may be transmitted to and received by the mobile application **114** via the first communication link **120a.**

At operation **208,** the received information may be stored in the driver's driver profile **116.** For example, the mobile application **114** may store the one or more of the driver-adjusted configuration settings and trip summary information, if provided, in association with the first vehicle **100a** in the driver profile **116** stored on the mobile application **114.** In some examples, the mobile application **114** may further transmit the updated driver profile information, which may include trip summary information, to the server **106** via a second communication link **122.**

At operation **210,** an indication of the driver operating another vehicle **100** (e.g., a second vehicle **100b)** at a second time may be received. For example, when the driver's mobile computing device **112** is within short-range wireless communication range of the second vehicle **100b,** an option to establish a first communication link **120b** with the second vehicle **100b** may be presented on the driver's mobile computing device **112.** In other examples, an option to establish the first communication link **120b** with the driver's mobile computing device **112** may be presented on a graphical display of the second vehicle **100b.**

At operation **211,** the first communication link **120b** may be selectively established, and at operation **212,** the driver profile **116** associated with the driver may be accessed from storage. The storage may include local storage on the mobile computing device **112** and/or a remote driver profile data store **118** accessed via a second communication link **122,** such as an IP-based network. At decision operation **214,** a determination may be made as to whether information included in the driver profile includes driver-adjusted configuration settings **104** associated with the second vehicle **100b.** For example, the mobile application **114** may receive information identifying the second vehicle **100b** when establishing the first communication link **120b** with the second vehicle **100b.** In some examples, the determination may be based on whether driver-adjusted configuration settings **104** included in the driver profile **116** are associated with a same type (e.g., make and model) of vehicle as the second vehicle **100b.** In other examples, the determination may be based on whether the driver-adjusted configuration settings **104** in the driver profile **116** are directly mappable to configuration settings **104** for the second vehicle **100b.** For example, one or more available adjustable configuration settings **104** in the second vehicle **100b** may match one or more driver-adjusted configuration settings **104** stored in the driver profile **116,** such as driver-adjusted configuration settings **104** stored in association with the driver operating the first vehicle **100a.**

When a determination is made that the driver profile information includes driver-adjusted configuration settings **104** associated with the second vehicle **100b,** at operation **216,** the driver-adjusted configuration settings **104** may be transmitted to the VCU **110** of the second vehicle **100b** via the first communication link **120b.** For example, the driver-adjusted configuration settings **104** to automatically adjust one or more configuration settings **104** of the second vehicle **100b** based on the received driver-adjusted configuration settings **104.** The VCU **110** of the second vehicle **100b** may prepare the second vehicle **100b** into operating condition for the same user. For instance, the seat, mirrors, lighting, graphical display, configurable operator control inputs, radio, and/or other configurable components of the second vehicle **100b** may be automatically adjusted based on the driver profile information received from the mobile application **114.**

Alternatively, when a determination is made that the driver profile information does not include driver-adjusted configuration settings **104** associated with the second vehicle **100b,** at optional operation **218,** one or more driver-adjusted configuration settings **104** included in the driver profile **116** may be translated into configuration settings **104** that match or correspond to the driver-adjusted configuration settings **104** associated with another vehicle **100,** such as the first vehicle **100a.** For example, a set of translated configuration settings **104** may be generated based on a configuration settings mappings **121** that may map one or more of the driver-adjusted configuration settings **104** associated with the first vehicle **100a** to one or more matching (if possible) or corresponding configuration settings **104** for the second vehicle **100b.**

At optional operation **220,** the translated configuration settings **104** may be provided to the second vehicle **100b.** For example, the mobile application **114** may be provided to the second vehicle **100b** via the first communication link **120b.** For example, the translated configuration settings **104** may be used by the VCU **110** to automatically adjust one or more configuration settings **104** of the second vehicle **100b** based on the received translated configuration settings **104.** The VCU **110** of the second vehicle **100b** may prepare the second vehicle **100b** into operating condition for the same user. For instance, the seat, mirrors, lighting, graphical display, configurable operator control inputs, radio, and/or other configurable components of the second vehicle **100b** may be automatically adjusted based on the translated configuration settings **104** received from the mobile application **114.**

At optional operation **222,** the translated configuration settings **104** associated with the second vehicle **100b** may be stored as configuration settings **104** associated with the second vehicle **100b** in the driver's driver profile **116.**

At decision operation **224,** a determination may be made as to whether driver-specific configuration settings **104** may be received for the second vehicle **100b** during and/or after operation of the second vehicle **100b.** For instance, when one or more of the driver-adjusted configuration settings are transmitted to and received by the mobile application **114** via the first communication link **120b,** at operation **226,** the driver-adjusted configuration settings **104** may be stored in the driver profile **116.** For example, the driver profile **116** may include a first set of configuration settings **104** associated with the first vehicle **100a** and a second set of configuration settings **104** associated with the second vehicle **100b.** In some examples, the first set of configuration settings **104** and the second set of configuration settings **104** may be stored as separate driver profile files, but linked by the driver ID for the driver.

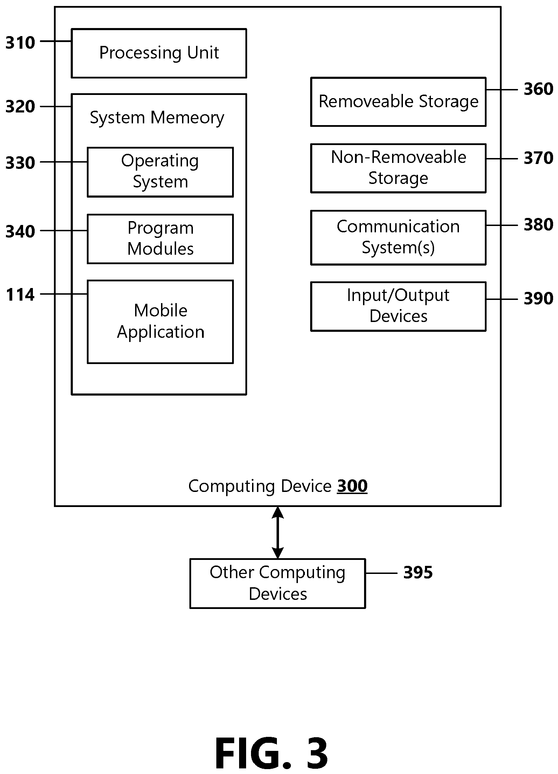

**FIGURE 3** is a block diagram illustrating physical components of an example computing device with which aspects may be practiced. The computing device **600** may include at least one processing unit **302** and a system memory **304.** The system memory **304** may comprise, but is not limited to, volatile (e.g. random access memory (RAM)), non-volatile (e.g. read-only memory (ROM)), flash memory, or any combination thereof. System memory **304** may include operating system **306,** one or more program instructions **308,** and may include sufficient computer-executable instructions for the mobile application **114,** which when executed, perform functionalities as described herein. Operating system **306,** for example, may be suitable for controlling the operation of computing device **300.** Furthermore, aspects may be practiced in conjunction with a graphics library, other operating systems, or any other application program and is not limited to any particular application or system. This basic configuration is illustrated by those components within a dashed line **310.** Computing device **300** may also include one or more input device(s) **312** (keyboard, mouse, pen, touch input device, etc.) and one or more output device(s) **314** (e.g., display, speakers, a printer, etc.).

The computing device **300** may also include additional data storage devices (removable or non-removable) such as, for example, magnetic disks, optical disks, or tape. Such additional storage is illustrated by a removable storage **316** and a non-removable storage **318.** Computing device **300** may also contain a communication connection **320** that may allow computing device **300** to communicate with other computing devices **322,** such as over a network in a distributed computing environment, for example, an intranet or the Internet. Communication connection **320** is one example of a communication medium, via which computer-readable transmission media (i.e., signals) may be propagated.

Programming modules may include routines, programs, components, data structures, and other types of structures that may perform particular tasks or that may implement particular abstract data types. Moreover, aspects may be practiced with other computer system configurations, including hand-held devices, multiprocessor systems, microprocessor-based or programmable user electronics, minicomputers, mainframe computers, and the like. Aspects may also be practiced in distributed computing environments where tasks are performed by remote processing devices that are linked through a communications network. In a distributed computing environment, programming modules may be located in both local and remote memory storage devices.

Furthermore, aspects may be practiced in an electrical circuit comprising discrete electronic elements, packaged or integrated electronic chips containing logic gates, a circuit using a microprocessor, or on a single chip containing electronic elements or microprocessors (e.g., a system-on-a-chip (SoC)). Aspects may also be practiced using other technologies capable of performing logical operations such as, for example, AND, OR, and NOT, including, but not limited to, mechanical, optical, fluidic, and quantum technologies. In addition, aspects may be practiced within a general purpose computer or in any other circuits or systems.

Aspects may be implemented as a computer process (method), a computing system, or as an article of manufacture, such as a computer program product or computer-readable storage medium. The computer program product may be a computer storage medium readable by a computer system and encoding a computer program of instructions for executing a computer process. Accordingly, hardware or software (including firmware, resident software, micro-code, etc.) may provide aspects discussed herein. Aspects may take the form of a computer program product on a computer-usable or computer-readable storage medium having computer-usable or computer-readable program code embodied in the medium for use by, or in connection with, an instruction execution system.

Although aspects have been described as being associated with data stored in memory and other storage mediums, data can also be stored on or read from other types of computer-readable media, such as secondary storage devices, like hard disks, floppy disks, flash drives, or a CD-ROM, or other forms of RAM or ROM. The term computer-readable storage medium refers only to devices and articles of manufacture that store data or computer-executable instructions readable by a computing device. The term computer-readable storage media does not include computer-readable transmission media.

Aspects of the present invention may be used in various distributed computing environments where tasks are performed by remote processing devices that are linked through a communications network.

Aspects of the invention may be implemented via local and remote computing and data storage systems. Such memory storage and processing units may be implemented in a computing device. Any suitable combination of hardware, software, or firmware may be used to implement the memory storage and processing unit. For example, the memory storage and processing unit may be implemented with computing device **300** or any other computing devices **322,** in combination with computing device **300,** wherein functionality may be brought together over a network in a distributed computing environment, for example, an intranet or the Internet, to perform the functions as described herein. The systems, devices, and processors described herein are provided as examples; however, other systems, devices, and processors may comprise the aforementioned memory storage and processing unit, consistent with the described aspects.

The description and illustration of one or more aspects provided in this application are intended to provide a thorough and complete disclosure of the full scope of the subject matter to those skilled in the art and are not intended to limit or restrict the scope of the invention as claimed in any way. The aspects, examples, and details provided in this application are considered sufficient to convey possession and enable those skilled in the art to practice the best mode of the claimed invention. Descriptions of structures, resources, operations, and acts considered well-known to those skilled in the art may be brief or omitted to avoid obscuring lesser known or unique aspects of the subject matter of this application. The claimed invention should not be construed as being limited to any embodiment, aspects, example, or detail provided in this application unless expressly stated herein. Regardless of whether shown or described collectively or separately, the various features (both structural and methodological) are intended to be selectively included or omitted to produce an embodiment with a particular set of features. Further, any or all of the functions and acts shown or described may be performed in any order or concurrently. Having been provided with the description and illustration of the present application, one skilled in the art may envision variations, modifications, and alternate embodiments falling within the spirit of the broader aspects of the general inventive concept provided in this application that do not depart from the broader scope of the present disclosure.

## Claims

1. A method, comprising:
creating a driver profile corresponding to a driver;
receiving an indication of the driver operating a first vehicle at a first time;
establishing a first communication link with the first vehicle;
receiving, via the first communication link, adjusted configuration settings associated with the first vehicle;
storing the adjusted configuration settings associated with the first vehicle in the driver profile;
receiving an indication of the driver operating a second vehicle at a second;
establishing a second communication link with the second vehicle;
determining the driver profile includes adjusted configuration settings that are mappable to configuration settings of the second vehicle;
mapping the adjusted configuration settings in the driver profile to a set of adjusted configuration settings associated with the second vehicle; and
providing the adjusted configuration settings associated with the second vehicle to the second vehicle via the second communication link to personalize the second vehicle to the driver.

2. The method of claim 1, wherein:
determining the driver profile includes adjusted configuration settings that are mappable to configuration settings of the second vehicle comprises determining the second vehicle is a same type of vehicle as the first vehicle; and
providing the adjusted configuration settings to the second vehicle comprises providing the adjusted configuration settings associated with the first vehicle to the second vehicle.

3. The method of claim 1 or claim 2, wherein determining the driver profile includes adjusted configuration settings that are mappable to configuration settings of the second vehicle comprises:
determining the second vehicle is a different type of vehicle as the first vehicle;
accessing a set of configuration setting mappings; and
determining the set of configuration setting mappings includes mappings between configuration settings of the first vehicle and the second vehicle.

4. The method of any of the preceding claims, further comprising using the mappings to translate one or more adjusted configuration settings associated with the first vehicle to a corresponding set of translated configuration settings for the second vehicle.

5. The method of any of the preceding claims, wherein providing the adjusted configuration settings to the second vehicle comprises providing the mappings to the second vehicle to be translated into a set of translated configuration settings for the second vehicle.

6. The method of any of the preceding claims, further comprising:
receiving, from the first vehicle, driver-specific trip summary information associated with operation of the first vehicle;
including the driver-specific trip summary information associated with operation of the first vehicle in the driver profile;
receiving, from the second vehicle, driver-specific trip summary information associated with operation of the second vehicle; and
including the driver-specific trip summary information associated with operation of the second vehicle in the driver profile.

7. The method of any of the preceding claims, further comprising transmitting the driver profile to a driver rewards system operative to reward drivers for positive driving behaviors based on an evaluation of driver-specific trip summary information associated with the driver over a plurality of time periods.

8. A system, comprising:
at least one processor;
a memory including instructions, which when executed by the processor, cause the system to:
create a driver profile corresponding to a driver;
receive an indication of the driver operating a first vehicle at a first time;
establish a first communication link with the first vehicle;
receive, via the first communication link, adjusted configuration settings associated with the first vehicle;
store the adjusted configuration settings associated with the first vehicle in the driver profile;
receive an indication of the driver operating a second vehicle at a second time;
establish a second communication link with the second vehicle;
determine the driver profile includes adjusted configuration settings that are mappable to configuration settings of the second vehicle;
map the adjusted configuration settings in the driver profile to a set of adjusted configuration settings associated with the second vehicle; and
provide the adjusted configuration settings associated with the second vehicle to the second vehicle via the second communication link to personalize the second vehicle to the driver.

9. The system of claim 8, wherein:
the second vehicle is a same type of vehicle as the first vehicle; and
the adjusted configuration settings associated with the second vehicle include adjusted configuration settings associated with the first vehicle.

10. The system of claim 8 or claim 9, wherein when the second vehicle is a different type of vehicle as the first vehicle, the instructions cause the system to:
access a set of configuration setting mappings; and
determine the set of configuration setting mappings includes mappings between configuration settings of the first vehicle and the second vehicle.

11. The system of any of the preceding claims 8-10, wherein the instructions cause the system to use the mappings to translate one or more adjusted configuration settings associated with the first vehicle to a corresponding set of translated configuration settings for the second vehicle.

12. The system of any of the preceding claims 8-11, wherein in providing the adjusted configuration settings associated with the second vehicle to the second vehicle, the instructions cause the system to provide the mappings to the second vehicle to be translated into a set of translated configuration settings for the second vehicle.

13. The system of any of the preceding claims 8-12, wherein the first communication link and the second communication link include a wireless personal area network.

14. The system of any of the preceding claims 8-13, wherein the instructions further cause the system to:
store adjusted configuration settings associated with the second vehicle as adjusted configuration settings associated with the second vehicle in the driver profile;
receive, via the second communication link, adjusted configuration settings associated with the second vehicle; and
update the adjusted configuration settings associated with the second vehicle stored in the driver profile.

15. The system of any of the preceding claims 8-14, wherein the instructions further cause the system to:
receive, from the first vehicle, driver-specific trip summary information associated with operation of the first vehicle;
include the driver-specific trip summary information associated with operation of the first vehicle in the driver profile;
receive, from the second vehicle, driver-specific trip summary information associated with operation of the second vehicle; and
include the driver-specific trip summary information associated with operation of the second vehicle in the driver profile; and
provide the driver profile to a driver rewards system operative to reward drivers for positive driving behaviors based on an evaluation of driver-specific trip summary information associated with the driver over a plurality of time periods.
